# FASCICULE DE BREVET EUROPEEN

(11) **EP 1 989 590 B1**
(45) Date de publication et mention de la délivrance du brevet: **21.09.2011**
(21) Numéro de dépôt: 07731676.8
(22) Date de dépôt: 01.03.2007
(51) Int. Cl.: G02F 1/365, G02F 1/35

(54) **PROCEDE DE GENERATION D'UNE SOURCE LARGE BANDE SPECTRALE PAR ACCORD DE PHASE INCLUANT DES MODES DE FUITE**
VERFAHREN ZUR ERZEUGUNG EINER SPEKTRALEN BREITBANDQUELLE MIT PHASENANPASSUNG MIT LECKLICHTMODEN
METHOD FOR GENERATING A SPECTRAL BROADBAND SOURCE BY PHASE MATCHING INCLUDING LEAKAGE MODES

(30) Priorité: 01.03.2006 FR 0601839
(43) Date de publication de la demande: 12.11.2008
(73) Titulaire: CENTRE NATIONAL DE LA RECHERCHE SCIENTIFIQUE (CNRS), 75794 Paris Cedex 16 (FR)
(72) Inventeur: COUDERC, Vincent, F-87430 Verneuil Sur Vienne (FR); PIOGER, Paul-Henri, F-87000 Limoges (FR); BARTHELEMY, Alain, F-87100 Limoges (FR); LEPROUX, Philippe Paul, F-87000 Limoges (FR); PAGNOUX, Dominique, F-87100 Limoges (FR); HUSS, Guillaume, F-87000 Limoges (FR)
(74) Mandataire: Novagraaf Technologies
(86) Numéro de dépôt international: PCT/FR2007/050859
(87) Numéro de publication internationale: WO 2007/099262

(56) Documents cités:
- US-A- 4 981 337
- Optics Letters Opt. Soc. America USA, vol. 30, no. 12, 15 juin 2005 (2005-06-15), pages 1566-1568, XP002398712 ISSN: 0146-9592
- FEDOTOV ET AL: "Assorted non-linear optics in microchannel waveguides of photonic-crystal fibers" OPTICS COMMUNICATIONS, NORTH-HOLLAND PUBLISHING CO. AMSTERDAM, NL, vol. 255, no. 4-6, 15 novembre 2005 (2005-11-15), pages 218-224, XP005124683 ISSN: 0030-4018
- OPT. EXPRESS; OPTICS EXPRESS JANUARY 2004, vol. 12, no. 2, janvier 2004 (2004-01), pages 347-353, XP002398713
- KIMIO TATSUNO: "DIFFRACTION-LIMITED COLLIMATION OPTICS FOR A CHANNEL WAVEGUIDE CERENKOV FREQUENCY DOUBLER FOR DIODE LASERS", APPLIED OPTICS, OPTICAL SOCIETY OF AMERICA, US, vol. 31, no. 3, 20 January 1992 (1992-01-20), pages 305-310, XP000247792, ISSN: 0003-6935
- DATABASE COMPENDEX [en ligne] ENGINEERING INFORMATION, INC., NEW YORK, NY, US 21 Juin 2010 ERKINTALO M ET AL: 'Experimental signatures of dispersive waves emitted during soliton collisions' Database accession no. E20102613034796 & OPTICS EXPRESS 20100621 OPTICAL SOCIETY OF AMERICA USA, vol. 18, no. 13, 21 June 2010 (2010-06-21) , pages 13379-13384, DOI: DOI:10.1364/OE.18.013379

## Description

La présente invention concerne le domaine des procédés de génération des sources lumineuses, et notamment des sources large bande, ou continuum de lumière.

Des procédés de génération d'un continuum de lumière sont connus de l'art antérieur, par exemple par les documents WO 2005/062113, ou WO 2005/071483 de la société KOHERAS. De façon connue en soi, les méthodes de génération de continuum de lumière utilisent un guide d'onde optique tel qu'une fibre optique possédant des propriétés de dispersion et de confinement du champ électromagnétique, par exemple une fibre non-linéaire. En entrée de la fibre, on injecte un rayonnement lumineux possédant un spectre étroit, et ce spectre est étendu par les propriétés non linéaires du guide couplé à des propriétés de dispersion.

A ce titre, un premier but de la présente invention est de fournir une alternative aux procédés de génération d'un continuum de lumière connus.

Par ailleurs, la génération de continuum dans les fibres optiques est obtenue de façon classique par l'intermédiaire de plusieurs effets non linéaires tels que l'effet Raman, les effets paramétriques ou l'automodulation de phase. Les effets paramétriques permettent d'obtenir des spectres lisses sur de grandes largeurs spectrales, et sont actuellement les effets non linéaires les plus prometteurs pour engendrer des spectres larges.

Cependant, ces effets nécessitent l'accord des vitesses de phase entre les ondes de pompe et les ondes signal. Cet accord de phase dépend de la courbe de dispersion du guide optique, de la direction de propagation des modes guidés, et des puissances véhiculées sur chacun d'eux. Dans le cas d'une propagation unimodale, une seule direction de propagation est privilégiée, et la plage spectrale sur laquelle l'accord de phase reste possible est limitée, ce qui a pour conséquence un élargissement spectral plus faible.

Un autre but de la présente invention est donc de faciliter les accords de phase dans les guides d'onde destinés à générer un continuum de lumière.

Dans le domaine des guides d'onde, on connaît l'effet Cerenkov utilisant des modes de propagation dits « modes de fuite » dans lesquels la lumière s'échappe du guide. Cet effet est par exemple décrit pour certains guides d'onde dans les articles de Kiyofumi Chikuma et al. ("Theory of optical second-harmonic generation in crystal-core fibers based on phase matching of Cerenkov-type radiation", Opt. Soc. Am. B, Vol. 9, N° 7 July 1992) et de K. Hayata et al. (Enhancement of the guided-wave second harmonic generation in the form of Cerenkov radiation ; Appl. Phys. Lett, 56 (3) 15 January 1990). Selon l'effet Cerenkov, une partie de l'onde lumineuse se propageant dans le coeur de la fibre peut être convertie à une autre longueur d'onde qui se propage - de manière non colinéaire. Cette propagation dans une autre direction (mode de fuite) de celle du mode guidé permet d'obtenir un accord de phase entre les ondes et d'onc de convertir une partie des radiations à d'autres fréquences. Cette conversion non conventionnelle n'est possible que dans le cas d'un recouvrement non nul entre les modes de coeur et de fuite.

Lorsqu'une onde lumineuse parcourt une fibre optique, une partie de l'énergie se propageant dans le coeur peut être rayonnée à l'extérieur par l'intermédiaire d'un couplage avec des modes non guidés. Ces modes sont alors appelés « mode de fuite » et sont une caractéristique fondamental de l'effet Cerenkov. L'effet Cerenkov est donc un exemple de propagation avec accord de phase non colinéaire.

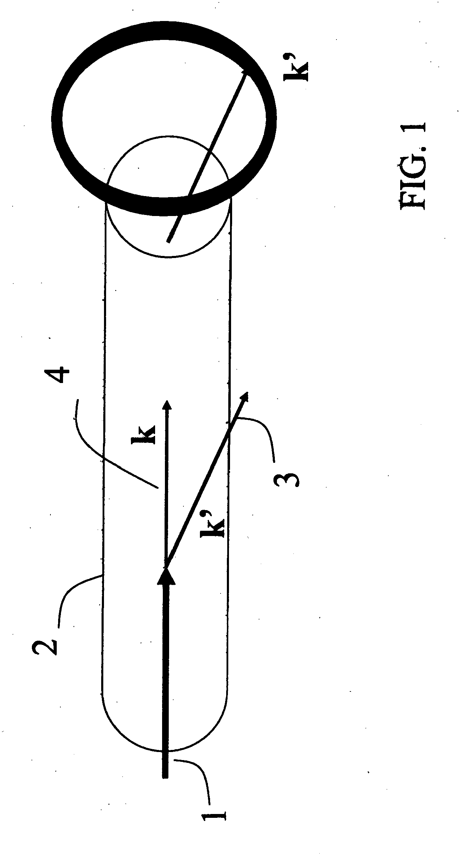

Cet effet est par exemple observable à l'oeil nu et correspond à l'illumination du guide d'onde non plus seulement à la sortie de la fibre, mais également sur toute la longueur de la fibre, comme illustré FIG. 1. Sur cette figure, de façon connu en soi une onde d'entrée 1. pénètre dans une fibre 2. Par effet Cerenkov, et selon les caractéristiques de la fibre 2, une partie de l'onde 1 est guidée dans la fibre sous la forme d'une onde 3 de vecteur d'onde k colinéaire au vecteur d'onde de l'onde d'entrée 1, et une partie de l'onde sort de la fibre sous la forme d'une onde de fuite 4 de vecteur d'onde k' d'orientation différente de celle du vecteur k.

On peut noter un premier effet visuel de ces modes de fuite, puisque l'onde de fuite sort de la fibre et éclaire donc celle-ci sur toute sa longueur.

Un second effet visuel est qu'en sortie de la fibre, la répartition de l'onde se fait selon un anneau et non plus selon une tache centrale dont la direction de propagation est colinéaire à l'axe de la fibre comme en l'absence de modes de fuite. Cet anneau est également représenté figure 1.

Ces effets de mode de fuite sont le plus souvent des effets non désirés dans les fibres linéaires puisqu'une partie de la puissance de l'onde d'entrée 1 est perdue sous la forme de l'onde de fuite 4.

Ces effets de fuite n'ont pas été utilisés avantageusement pour des fibres non linéaires pour la génération de continuum de lumière.

Le document référencé XP-002398712, Optics Letters, Vol. 30, No 12, du 15 juin 2005, intitulé « Generation of Broadband femtosecond visible pulses in dispersion-micromanaged holey fibers», de Fei Lu et. al. traite de la génération de continuum de lumière dans un guide d'onde de façon évolutive. La génération de ce continuum dépend de radiations dites Cerenkov. à partir d'une propagation soliton. Toutefois, ce type de radiation Cerenkov est un effet spectral et non spatial comme pour les modes de fuites décrits ci-dessus. La différence entre ces deux effets est connue de l'homme du métier comme le prouve l'article de Skryabin, Science 301 1705, 2003 référencé dans la publication XP-002398712 susmentionnée. Ce document ne décrit donc pas d'utilisation de modes de fuite et ne mentionne nullement de fibres comprenant plusieurs coeurs.

En outre, le document de Fedotov et al. intitulé « Assorted non-linear optics in microchannel waveguides of photonic-crystal fibers », Optics Communications 255, 2005 traite de la génération de fréquence dans des micro-guides présents dans une fibre microstructurée. Comme pour le document précédemment mentionné, l'effet Cerenkov dispersif du document de Ferodov et al. est un effet spectral et non spatial. Comme précédemment, le document de Skryabin, Science 301 1705, 2003 référencé dans le document de Fedotov et al. décrit cette différence. Ce document ne décrit donc pas d'utilisation de modes de fuite ne mentionne nullement de fibres comprenant plusieurs coeurs.

De la même façon, le document référencé XP 002398713, intitulé **«** Generation of a broadband continuum with high spectral cohérence in tapered signle-mode optical fibersé, Fei Lu et al. Optics Express Vol 12, n°2 concerne un effet Cerenkov de type spectral.

Un des buts de la présente invention est d'utiliser avantageusement les modes de fuite dans une fibre optique dans le but de générer un continuum de lumière.

Un autre but de la présente invention est de trouver une alternative aux procédés de génération de continuum connus.

Par ailleurs, lorsque l'on met en oeuvre des effets paramétriques avec accord de phase colinéaire dans le cas d'une propagation unimodale, la plage spectrale sur laquelle l'accord de phase est possible est limitée. L'élargissement spectral obtenu est donc, de la même façon, limité.

Un autre but de la présente invention est donc d'obtenir un meilleur élargissement spectral dans la génération de sources large bande.

Le document US 4,981,337 enseigne une génération de fréquence par effet Cerenkov spatial, et donc par mode de fuite. Dans ce document, la génération de fréquence ne concerne que la génération de second harmonique. C'est un effet non linéaire d'ordre deux qui ne permet pas d'induire une conversion large bande. En outre, aucun effet de polarisation n'est décrit dans ce document. Enfin, ce document ne concerne qu'un guide à un seul coeur. En effet, ce document décrit une gaine optique entourant un coeur, mais cette gaine a un indice égal à celui du coeur, de sorte que l'ensemble comprenant le coeur et la gaine ne peut être considéré par l'homme du métier comme un ensemble à deux coeurs. Ainsi, la gaine entourant le coeur ne peut pas être apte à guider les modes de fuite engendrés au sein du coeur, de sorte que la puissance spectrale de ces modes est perdue.

Un autre but de l'invention est de fournir un guide permettant de générer un continuum de lumière ayant une bonne puissance spectrale.

Au moins un de ces buts est atteint selon la présente invention par le procédé de la revendication 1.

Grâce au guide d'onde tel que décrit -ci-dessus, en particulier grâce aux non-linéarités du premier coeur de guide, un continuum de lumière peut être généré au sein de la fibre selon l'invention par accord de phase colinéaire. Par ailleurs, par effet Cerenkov, d'autres longueurs d'onde sont générées grâce aux les longueurs d'onde du continuum ou par la longueur d'onde d'origine et en utilisant un accord de phase non-colinéaire de type Cerenkov.

Avec un tel guide d'onde, on ne cherche donc plus à éliminer les modes de fuite dans un guide d'onde, mais à exacerber et à confiner ces modes dans un second coeur concentrique. Ceci est en particulier réalisé par la fourniture d'un deuxième coeur agencé pour confiner les modes de fuite qui sortent du premier coeur, de sorte à améliorer la puissance spectrale du continuum.

Il en résulte donc un nouveau continuum en sortie du guide selon l'anneau caractéristique des modes de fuite.

Plus spécifiquement, ledit signal lumineux d'origine peut comprendre au moins une longueur d'onde d'origine, ledit premier coeur du guide d'onde non linéaire peut être apte à générer un signal comprenant au moins une longueur d'onde à partir dudit signal lumineux d'origine, et ledit premier coeur peut être en outre apte à engendrer des modes de fuite dudit signal.

De la sorte, le coeur du guide est spécialement adapté pour engendrer des signaux qui seront générés par les non linéarités du guide d'onde.

Dans un mode de réalisation, afin de pouvoir modifier les caractéristiques spectrales du signal ou du continuum obtenu en sortie dudit guide d'onde, le dispositif comprend en outre des moyens de polarisation apte à modifier la polarisation dudit signal lumineux d'origine avant son injection dans ledit guide.

En effet, il est connu en soi que l'indice optique du guide d'onde vu par l'onde se propageant dans le guide, dépend de la polarisation de l'onde. Le continuum obtenu en sortie de guide dépendant de l'indice, de la biréfringence et de la dispersion dudit guide, la modification de la polarisation de l'onde incidente au guide modifie donc le spectre généré.

De façon alternative, les moyens de polarisation peuvent être aptes à modifier la polarisation dudit signal lumineux au cours de sa propagation dans ledit guide.

Afin de faciliter la détection du signal ou du continuum en sortie de l'onde, le dispositif comprend en outre des moyens de focalisation dudit signal lumineux de sortie généré en sortie dudit guide d'onde.

En effet, comme on l'a vu précédemment, le signal généré selon les modes de fuite sort du guide selon un anneau, ce qui peut donc dans certaines conditions poser des problèmes de détection et d'utilisation du signal généré. Les moyens de focalisation permettent alors de confiner cet anneau en une tache focale plus homogène.

Afin d'augmenter la puissance crête de l'onde injectée dans la fibre, le dispositif comprend également de préférence un amplificateur de puissance.

En outre, afin de pouvoir modifier les caractéristiques spectrales obtenues en sortie de fibre, ledit procédé comporte un élément de polarisation qui permet de modifier l'orientation du vecteur polarisation dudit signal d'entrée et donc de sélectionner les longueurs d'onde de sortie.

L'invention sera mieux comprise à l'aide de la description détaillée ci-dessous et des figures données en annexe dans lesquelles :
- FIG. 1 illustre l'effet Cerenkov dans une fibre optique ;
- FIG. 2 illustre un exemple de dispositif de génération de lumière;
- FIG. 3 représente un exemple de fibre non linéaire utilisé dans un mode de réalisation de la présente invention ;
- Les FIG. 4A et 4B représentent un comparatif des spectres obtenus sans les modes de fuite (FIG. 4A) et en utilisant les modes de fuite selon la présente invention (FIG. 4B).

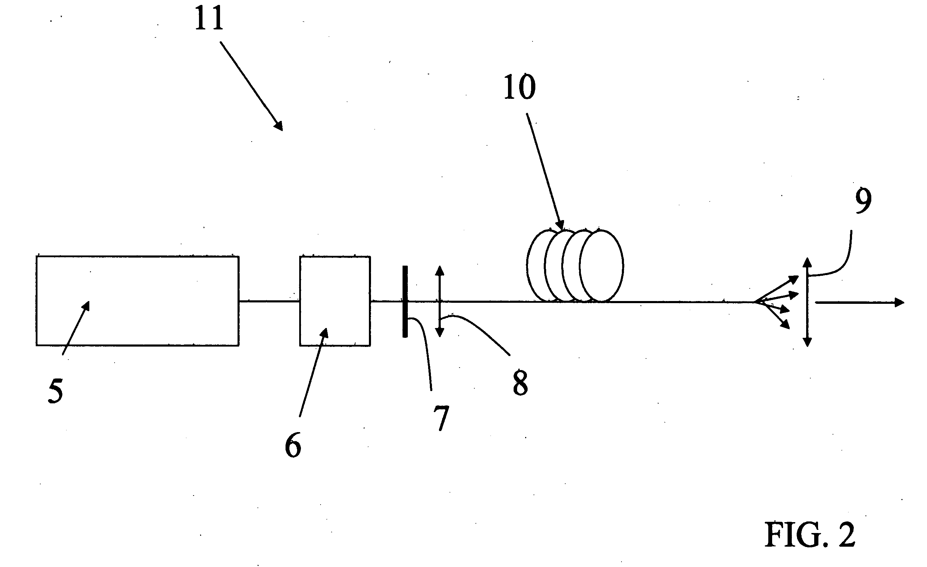

Comme illustré à la figure 2, un dispositif 11 de génération de lumière utilisé dans l'invention comprend un dispositif 5 de pompage apte à émettre au moins un signal d'origine à une longueur d'onde fixée et un guide d'onde 10. Ces éléments seront décrits plus en détails ci-après.

Le dispositif 11 comprend également un amplificateur de puissance 6. Cet amplificateur a pour fonction d'amplifier le signal lumineux d'origine à la longueur d'onde émise par le dispositif de pompage 5 de sorte à d'augmenter la densité spectrale de puissance du signal généré en sortie du guide.

Le dispositif 11 comprend également une lame de phase 7. Cette lame a pour fonction de permettre la modification de la polarisation du signal émis par le dispositif de pompage 5 éventuellement amplifié par l'amplificateur 7.

Le dispositif 11 comprend également une lentille de collimation 8 qui a pour fonction de réaliser l'injection dans là fibre 10.

Le dispositif de pompage 5 est par exemple un laser compact délivrant un signal lumineux à 1084 nm polarisé ou non. Ce laser peut être fibré ou massif. Il peut fonctionner en régime impulsionnel femtoseconde, picoseconde ou nanoseconde, à des fréquences de répétition variables.

L'amplificateur de puissance 6 est de type connu en soi et permet d'augmenter la puissance crête des impulsions afin de favoriser les effets non linéaires dans le guide d'onde 10. Cet amplificateur peut être cependant supprimé si le laser 5 est assez puissant.

La lumière polarisée et collimatée et injectée dans le guide d'onde 10. Ce guide d'onde est par exemple une fibre optique.

Cette fibre est par exemple une fibre microstructurée en silice non linéaire au sens où son coeur de silice permet de générer par effet non linéaire d'autres fréquences à partir du signal injecté. Ces mécanismes non linéaires sont connus en soi. Ils permettent de générer un signal comprenant une pluralité de longueurs d'onde à partir d'un signal d'origine quasi-monochromatique. Le signal génère peut notamment prendre la forme d'un continuum de lumière.

Le coeur de la fibre 10 est également adapté, en fonction de la longueur d'onde incidente du signal lumineux d'origine, pour permettre la génération de modes de .fuite par effet Cerenkov hors du coeur de la fibre.

Ainsi, grâce à la non linéarité du coeur de la fibre 10, des longueurs d'onde sont générées par accord de phase colinéaire à partir de l'onde incidente.

Ces longueurs d'onde ainsi que la longueur d'onde de l'onde incidente génèrent alors de nouvelles longueurs d'onde lors de leur fuite à partir du coeur central. Leur propagation dans une direction non colinéaire à la propagation de l'énergie guidée dans le coeur permet d'obtenir un accord de phase non colinéaire de type Cerenkov.

En sortie de la fibre 10, il se crée un anneau lumineux selon la direction de fuite des modes de fuite dans la fibre 10. Cet anneau lumineux comprend donc selon l'invention un spectre formé de plusieurs longueurs d'onde. Ce spectre peut être large en fréquence et est due à une combinaison d'effets non linéaire présent lors de la propagation de l'énergie dans ces modes de fuite.

Ainsi, on peut créer un premier continuum de lumière dans le coeur central de la fibre par effet non linéaire. Ce premier continuum fuit et provoque la génération de nouvelles longueurs d'onde par effet Cerenkov ce qui crée un second continuum de lumière en sortie de la fibre.

Afin de faciliter la détection du signal de sortie de la fibre 10, il est possible d'utiliser un dispositif de refocalisation du signal en anneau. Un tel dispositif de refocalisation est par exemple décrit en détail dans l'article de Chikuma et al., Applied Opticss, Vol 33, p. 3198, 1994.

Tel que précédemment décrit, la fibre 10 comprend donc un premier coeur de fibre. La lumière issue de ce premier coeur, se propageant par l'intermédiaire de modes à fuite, sort de celui-ci. On peut notamment observer cet effet de fuite en visualisant l'énergie lumineuse sortant sur la section transverse tout au long de la fibre.

Toutefois, il est avantageux de pouvoir augmenter la densité spectrale de puissance du signal lumineux en sortie de fibre ou du continuum de lumière obtenu en récupérant cette lumière perdue.

Pour cela, la fibre 10 selon l'invention comprend selon une variante de l'invention, un deuxième coeur de fibre, entourant par exemple le premier, et destiné à confiner les modes de fuite dans la fibre au niveau de ce second coeur.

En ajoutant ce second coeur, les modes de fuite ne sont maintenant plus observables à l'oeil nu le long de la fibre.

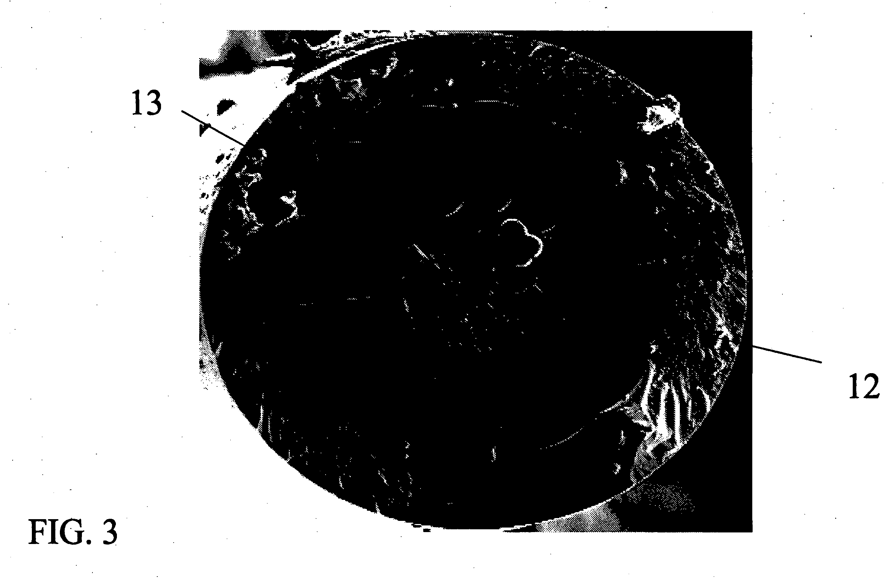

La figure 3 illustre un exemple d'une telle fibre 10 à double coeur, le deuxième coeur 13 permettant le confinement des modes de fuite issus du premier coeur 12. Sur cette figure, le diamètre du premier coeur 12 est de 4 µm, le diamètre des trous de la microstructure est de 1,8 µm, le diamètre du second coeur 13 est de 50 µm, pour un diamètre externe total de 150 µm.

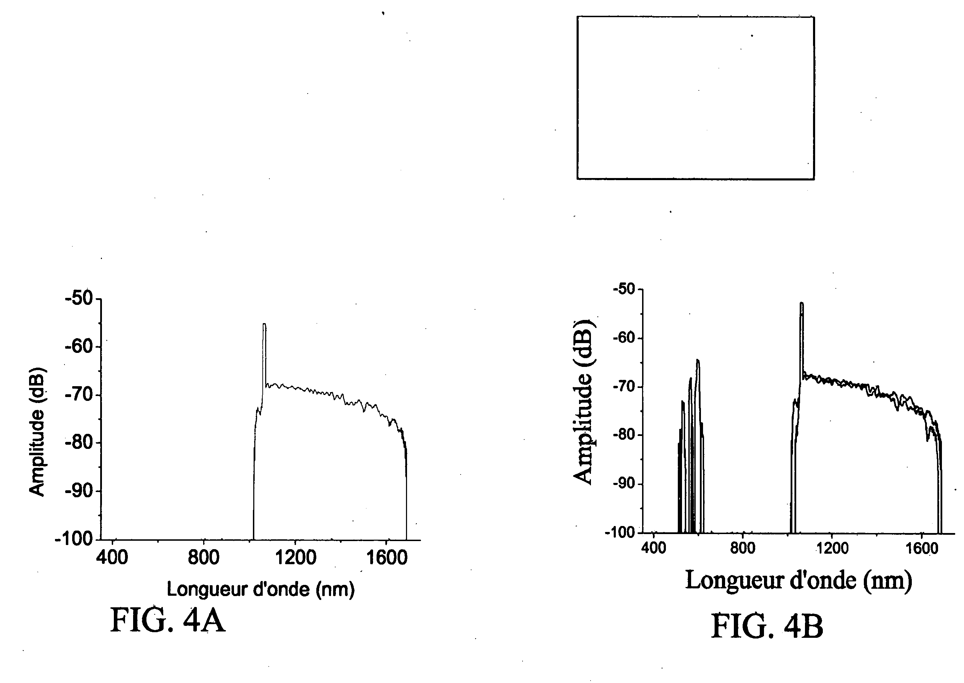

Les figures 4A et 4B représentent un comparatif des spectres obtenus sans les modes de fuite (FIG. 4A) et en utilisant les modes de fuite selon la présente invention (FIG. 4B). FIG. 4A, on a représenté les résultats obtenus pour un simple élargissement de spectre. On observe que le spectre large bande est continu et ne s'étant que dans l'infra rouge.

Au contraire, par l'utilisation des modes de fuite et du dispositif 11 selon l'invention, le spectre large bande obtenue s'étend également dans le visible. Le spectre ainsi généré n'est plus complètement continu mais montre une multitude de raies discrètes. Ces raies discrètes sont la signature d'accords de phase ponctuelles pour plusieurs longueurs d'onde se propageant sur des modes à fuite et dans une structure complexe pouvant présenter des bandes interdites photoniques.

La collecte de l'ensemble de ces longueurs d'ondes discrètes permet de reconstituer un spectre quasi continu ou toutes les longueurs d'onde du rayonnement visible sont présentes.

Selon l'invention, il est également possible de modifier la distribution de longueurs d'onde dans le spectre correspondant aux modes de fuite. En effet, il est connu que le spectre de l'onde générée par effet non linéaire est fonction, dans les fibres biréfringences, de la direction du vecteur polarisation. Cette direction du vecteur polarisation permet d'obtenir ou de ne pas obtenir un accord de phase qui permet alors d'initier le processus non linéaire. Ce processus, dépendant de la polarisation, est également présent lors de la conversion de fréquence avec des modes à fuite. Une modification de la polarisation de l'onde d'entrée permet alors une sélection des longueurs d'onde en sortie.

Pour une fibre par exemple biréfringente, on positionne donc en entrée de la fibre la lame de phase 7, par exemple sous la forme d'une lame demi-onde, qui permet de faire tourner la polarisation de l'onde incidente dans la fibre et donc de sélectionner les longueurs d'onde émise sur les modes de fuite. Si la ou les longueurs d'onde du signal de sortie de la fibre sont fixées, on peut alors choisir la polarisation et/ou la longueur d'onde du signal d'origine adapté.

Il est par exemple possible de sélectionner le processus non linéaire dominant lors de la conversion de longueur d'onde en changeant l'orientation du vecteur polarisation. Le changement de processus permet alors un changement de longueur d'onde générée. Il est possible de passer, à partir d'une onde à 1064nm, d'un effet de triplage de fréquence (355nm) à un effet de doublage de fréquence (532nm) ou à un effet de somme de fréquence à partir d'un spectre large infrarouge se traduisant par une génération à (670nm).

Il est également entendu que tout procédé permettant d'améliorer génération du spectre continu en sortie de la fibre par les non linéarités peut également être utilisé en combinaison avec la présente invention, et en particulier le doublage de fréquence, le triplage de fréquence, les instabilités modulationnelles et/ou l'effet Raman.

## Revendications

1. Procédé pour la génération d'un signal lumineux de sortie large bande de type continuum de lumière à partir d'un signal lumineux d'origine sensiblement monochromatique, et d'une fibre optique (10) non linéaire comprenant au moins un premier coeur de fibre (12) non linéaire, comprenant des étapes consistant à
- injecter ledit signal lumineux d'origine dans ledit premier coeur de fibre optique (10) non linéaire ;
- générer un premier continuum à partir dudit signal lumineux d'origine grâce aux non-linéarités du premier coeur de fibre (12) ;
et **caractérisé en ce qu'**il comprend des étapes consistant à :
- générer un second continuum par effet Cerenkov utilisant un mode de fuite du signal lumineux d'origine et du premier continuum se propageant dans le premier coeur de fibre (12) de sorte à obtenir un signal de fuite se propageant en dehors dudit premier coeur non linéaire ;
- collecter ledit signal de fuite par l'intermédiaire d'un second coeur (13) de ladite fibre optique (10) dans lequel est inclus ledit premier coeur de fibre (12), et
- confiner au moins un mode de fuite dans ledit second coeur (13) de ladite fibre optique (10).

2. Procédé selon la revendication 1, comprenant en outre une étape consistant à modifier l'orientation du vecteur polarisation dudit signal lumineux d'origine pour sélectionner les longueurs d'onde de sortie.

## Claims

1. A method for generating an output broadband light signal of light continuum type from a light signal of substantially monochromatic source, and a non linear optical fiber (10) comprising at least a first non linear fiber core (12), comprising the steps of
- injecting said source light signal in said first non linear optical fiber core (10);
- generating a first continuum from said source light signal thanks to the nonlinearities of the first core of fiber (12);
and **characterized in that** it comprises the steps of:
- generating a second continuum by Cerenkov effect using a leaky mode of the source light signal and the first continuum propagating into the first core of fiber (12) such as to obtain a leakage signal propagating outside said first non linear core;
- collecting said leakage signal by means of a second core (13) of said optical fiber (10) wherein is included said first fiber core (12), and
- confining at least a leaky mode in said second core (13) of said optical fiber (10).

2. The method according to claim 1, further comprising a step of modifying the orientation of the polarization vector of said source light signal to select the output wavelengths.

## Patentansprüche

1. Verfahren zur Erzeugung eines BreitbandLichtaustrittssignals in der Art eines Lichtkontinuums, ausgehend von einem Wesentlichen monochromatischen Ursprung Lichtsignal und einer nicht linearen optischen Faser (10) mit wenigstens einem ersten nicht linearen Faserkern (12), mit den Schritten bestehend aus
- Einleiten des Ursprung-Lichtsignals in den nicht linearen ersten optischen Faserkern (10);
- Erzeugen eines ersten Kontinuums ausgehend von dem Ursprung-Lichtsignal aufgrund der Nicht-Linearitäten des ersten Faserkerns (12);
**dadurch gekennzeichnet, dass** dieses die Schritte umfasst, bestehend aus:
- Erzeugen eines zweiten Kontinuums durch einen Cerenkov-Effekt unter Ausnutzung eines Streumodus des Ursprung-Lichtsignals und des sich in dem ersten Faserkern (12) ausbreitenden ersten Kontinuums, um ein sich außerhalb des linearen ersten Kerns ausbreitendes Streusignal zu erhalten;
- Sammeln des Streusignals mithilfe eines zweiten Kerns (13) der Faseroptik (10), in welchem der erste Faserkern (12) enthalten ist, und
- Einschießen wenigstens eines Streumodus in dem zweiten Kern (13) der Faseroptik (10).

2. Verfahren nach Anspruch 1, mit ferner einem Schritt bestehend aus einem Modifizieren der Orientierung des Polarisationsvektors des Ursprung-Leuchtsignals, um Austrittswellenlängen zu selektionieren.
